# EUROPÄISCHE PATENTSCHRIFT

(11) **EP 0 943 388 B1**
(45) Veröffentlichungstag und Bekanntmachung des Hinweises auf die Patenterteilung: **02.05.2002**
(21) Anmeldenummer: 99103875.3
(22) Anmeldetag: 01.03.1999
(51) Int. Cl.: B23K 9/013, B26D 3/00

(54) **Verfahren zum Trennen von verkokten metallischen Formteilen**
Method for cutting coked metal articles
Procédé pour dé couper des pièces cokéfiés

(30) Priorität: 18.03.1998 DE 19811672
(43) Veröffentlichungstag der Anmeldung: 22.09.1999
(73) Patentinhaber: RUHR OEL GmbH, 45896 Gelsenkirchen (DE)
(72) Erfinder: Gierull, Horst, 45891 Gelsenkirchen (DE)
(74) Vertreter: Berg, Dirk, Dr.

(56) Entgegenhaltungen:
- EP-A- 0 121 870
- US-A- 5 683 821

## Beschreibung

Die Erfindung betrifft ein Verfahren zum Trennen von verkokten metallischen Formteilen.

In großtechnischen Anlagen, in denen Kohlenwasserstoffe hohen Temperaturen ausgesetzt werden, entsteht durch Zersetzung dieser Kohlenwasserstoffe Koks, der sich an der Innenwandung der Anlagenteile, durch die diese Kohlenwasserstoffe geführt werden, ablagert. Dies gilt insbesondere für thermische Crackverfahren in der Mineralölverarbeitung oder Petrochemie, z. B. Olefinanlagen. So ist es beispielsweise in derartigen Olefinanlagen notwendig, die Spaltrohre in den Öfen zu entkoken. Die Koksablagerungen können zu beachtliche Dicken erreichen bis hin zur vollständigen Verstopfung der Rohre. Bei Spaltrohren, die nicht entkokt werden können, ist deshlab nach einer Betriebszeit von etwa drei Jahren ein sogenanntes sprödes Reißen möglich. Gleiches gilt, wenn eine Notabstellung der Öfen erfolgte. Die Bildung von aufgekohlten Zonen im Inneren der Rohre und die damit verbundene Volumenvergrößerung führen zu erhöhten Spannungen in der Rohrwand. Intergranulare Spannungen entstehen durch Gefügeänderungen. Die Koksablagerungen führen ebenfalls zu erhöhten Spannungen in der Rohrwand durch unterschiedliche Schrumpfung von Koks und Metall. Durch die in den Spaltrohren verbliebenen Koksablagerungen, die einen erheblich kleineren Wärmeausdehnungskoeffizienten als der metallische Werkstoff aufweisen, entstehen bei der Abkühlung erhebliche Zugspannungen, so daß ein Trennen mit üblichen Trennverfahren wie Trennscheibe oder Luftsäge nicht gefahrlos möglich ist, da die Rohre bersten und Rohrstücke unkontrolliert in den Ofenraum fallen können. Auch ein Wasserschneiden ist nur bedingt anwendbar und erfordert zusätzliche aufwendige Maßnahmen für den Personenschutz. Ein Herausbrechen der verkokten Formteile mittels Hydraulikpressen ist aufgrund der Gefahr der Herbeiführung von Sekundärschäden, z. B. am umgebenden Mauerwerk, keine geeignete Methode.

Aufgabe der Erfindung ist es, ein Verfahren zur Verfügung zu stellen, das es ermöglicht, ohne größeres Gefährdungspotential der mit der Durchführung befaßten Personen und ohne weitere Material- oder Sekundärschäden hervorzurufen, verkokte Formteile zu trennen. Insbesondere sollen Formteile getrennt werden können, auf denen Koksablagerungen mit einer Dicke von 20 mm und mehr aufgewachsen sind. Desweiteren sollen insbesondere solche Formteile getrennt werden können, die aus einem hochlegierten Stahl bestehen und die nicht mit bekannten thermischen Trennverfahren wie z. B. autogenes Brennschweißen getrennt werden können.

Gelöst wurde die Aufgabe durch ein Verfahren zum Trennen von verkokten metallischen Formteilen, dadurch gekennzeichnet, daß die Formteile auf 700 - 900 ° C, insbesondere ca. 850 ° C vorgewärmt werden.

Es wurde überraschenderweise festgestellt, daß ein Trennen verkokter Formteile auf einfache Weise möglich ist, wenn diese vorher auf 700 - 900 ° C vorgewärmt werden. Durch diese Vorwärmung wird die Spannung aufgrund der unterschiedlichen Wärmeausdehnungskoeffizienten des abgelagerten Kokses und des Metalls gemindert, so daß ein gefahrloses Trennen gewährleistet ist. Bevorzugt wird das Material auf ca. 850 ° C erwärmt. Das Trennen erfolgt vorzugsweise durch Schweißen.

In einer bevorzugten Ausführungsform des erfindungsgemäßen Verfahrens wird der Formkörper auf einer Länge von 50 bis 100 mm, vorzugsweise ca. 80 mm erwärmt. Das Trennen erfolgt nach dem Erwärmen ca. in der Mitte der erwärmten Zone. Vorzugsweise erfolgt das Erwärmen mittels Gas-/Sauerstofflamme, insbesondere mit einer Spitze von 20 - 30 mm. In einer besonders günstigen Ausführungsform kann das Erwärmen vorteilhafterweise mit zwei oder mehr Flammen erfolgen.

Das Trennen der Formteile wird vorzugsweise im Elektroschweißverfahren durchgeführt und kann insbesondere durch Fugenhobeln erfolgen. Es wird vorzugsweise mit einer Stabelektrode bei ca. 450 Ampere gearbeitet. Bevorzugt weist die Stabelektrode einen Durchmesser von 4 mm auf. Geeignet sind Elektroden mit der DIN-Bezeichnung E 4343 RR (B 7) z. B. SH gelb R. Als vorteilhaft hat sich auch der Einsatz von Spezialelektroden erwiesen, die besonders zum Fugenhobeln, Ausnuten oder Schmelzscheiden geeignet sind. Dies sind beispielsweise Elektroden mit der Bezeichnung "Phönix Nut S" der Fa. Thyssen Schweißtechnik oder "Fox Nut" der Fa. Böhler. Diese Spezialelektroden bieten den Vorteil, daß die Koksschicht weitgehend durchbrochen werden kann. Üblicherweise wird bei diesen Arbeiten der Funkenflug mit dem Fachmann bekannten Schutzvorrichtungen eingeschränkt und die Schweißgase abgesaugt.

Mit dem erfindungsgemäßen Verfahren trennbare metallische Formteile sind insbesondere Schleudergußformteile, vorzugsweise Schleudergußrohre.

Das erfindungsgemäße Verfahren läßt sich auch dann mit Vorteil gegenüber anderen Verfahren einsetzen, wenn die abgelagerten Koksschichten eine Dicke von 20 mm und mehr aufweisen. Besonders geeignet ist das Verfahren zum Trennen von Formteilen, die aus hochlegierten Chrom/Nickel-Stählen bestehen, insbesondere wenn es sich um Legierungszusammensetzungen handelt, die 0,3 bis 0,5 Gew.-% Kohlenstoff, 1,0 bis 2,5 Gew.-% Silicium, < 1,5 Gew.-% Mangan, 20 bis 50 Gew.-% Chrom und 100 bis 70 Gew.-% Nickel aufweisen.

### Beispiel

Nach einer Notabstellung in einer Olefinanlage war es nicht mehr möglich, die Spaltrohre aus hochlegiertem Chrom/Nickel-Stahl in den Öfen in herkömmlicher Art und Weise zu entkoken. Die aufgewachsenen Koksablagerungen wiesen eine Dicke von bis zu 50 mm auf. Mit dem erfindungsgemäßen Verfahren war es möglich, innerhalb sehr kurzer Zeit (1,5 Std.) vier Rohrstücke von je ca. drei Meter Länge vom Hosenrohr bzw. von den Bögen gefahrlos zu trennen und aus dem Ofen zu entfernen. Die so getrennten Rohre sind nicht mehr gerissen oder geborsten, so daß keine Gefahr für die mit den Arbeiten beauftragten Personen bestand. Aufgrund der relativ schnellen Entfernung der verkokten Rohre war es möglich, unverzüglich mit der Neuberohrung zu beginnen, so daß die Produktionsstillstandzeit im Vergleich zu herkömmlichen Arbeitszeiten sehr gering gehalten werden konnte.

## Patentansprüche

1. Verfahren zum Trennen von verkokten metallischen Formteilen, die eine aufgewachsene Koksschicht aufweisen, **dadurch gekennzeichnet, daß** die Formteile auf 700 - 900 ° C. insbesondere ca. 850°C vorgewärmt werden.

2. Verfahren nach Anspruch 1, **dadurch gekennzeichnet, daß** die Vorwärmung des zu trennenden Formteils auf einer Länge von 50 - 100 mm, insbesondere ca. 80 mm erfolgt und die Trennung in etwa der Mitte dieses Bereichs durchgeführt wird.

3. Verfahren nach Anspruch 1 oder 2, **dadurch gekennzeichnet, daß** die Vorwärmung mittels Gas-/Sauerstoff-Flamme, vorzugsweise mit einer Spitze von 20 - 30 mm durchgeführt wird.

4. Verfahren nach mindestens einem der vorstehenden Ansprüche, **dadurch gekennzeichnet, daß** die Vorwärmung mit zwei oder mehr Flammen durchgeführt wird.

5. Verfahren nach mindestens einem der vorstehenden Ansprüche, **dadurch gekennzeichnet, daß** die Trennung mittels eines Elektro-Schweißverfahrens durchgeführt wird.

6. Verfahren nach mindestens einem der vorstehenden Ansprüche, **dadurch gekennzeichnet, daß** das Elektro-Schweißverfahren mittels Stabelektrode, vorzugsweise bei ca. 450 Ampere durchgeführt wird.

7. Verfahren nach mindestens einem der vorstehenden Ansprüche, **dadurch gekennzeichnet, daß** das Trennen mit Elektroden der Bezeichnung E 4343 RR (B7) erfolgt oder mit Spezialelektroden zum Fugenhobeln, Ausnuten oder Schmelzschneiden.

8. Verfahren nach mindestens einem der vorstehenden Ansprüche, **dadurch gekennzeichnet, daß** das Trennen durch Fugenhobeln erfolgt.

9. Verfahren nach mindestens einem der vorstehenden Ansprüche, **dadurch gekennzeichnet, daß** die zu trennenden metallischen Formteile Schleudergußteile, insbesondere Schleudergußrohre sind.

10. Verfahren nach mindestens einem der vorstehenden Ansprüche, **dadurch gekennzeichnet, daß** die metallischen Formteile aus einem hochliegierten Chrom/Nickel-Stahl bestehen.

11. Verfahren nach mindestens einem der vorstehenden Ansprüche, dadurch gekennnzeichnet, daß diese hochlegierten Stähle 0,3 bis 0,5 Gew.-% Kohlenstoff, 1,0 bis 2,5 Gew.-%, Silicium, < 1,5 Gew.-%, Mangan, 20 bis 50 Gew.-% Chrom und 10 bis 70 Gew.-% Nickel enthalten.

12. Verfahren nach mindestens einem der vorstehenden Ansprüche, dadurch gekennnzeichnet, daß die auf den verkokten metallischen Formteilen aufgewachsenen Koksschichten eine Dicke von 20 mm und mehr aufweisen.

## Claims

1. A process for cutting coked metal shaped parts comprising a deposited layer of coke,
**characterised in that** the shaped parts are preheated to 700 - 900 °C, in particular approx. 850 °C.

2. A process according to Claim 1,
**characterised in that** the preheating of the shaped part to be cut takes place at a length of 50 - 100 mm, in particular approx. 80 mm, and cutting is performed roughly in the middle of this range.

3. A method according to Claim 1 or 2,
**characterised in that** the preheating is performed by means of a gas/oxygen flame, preferably with a tip of 20 - 30 mm.

4. A process according to at least one of the preceding Claims,
**characterised in that** preheating is performed with two or more flames.

5. A process according to at least one of the preceding Claims,
**characterised in that** the cutting is performed by means of an electric welding process.

6. A process according to at least one of the preceding Claims,
**characterised in that** the electric welding process is performed by means of a stick electrode, preferably at approx. 450 ampere.

7. A process according to at least one of the preceding Claims,
**characterised in that** the cutting takes place with electrodes of the designation E 4343 RR (B7) or with special electrodes for gouging, veeing-out or fusion cutting.

8. A process according to at least one of the preceding Claims,
**characterised in that** cutting takes place by gouging.

9. A process according to at least one of the preceding Claims,
**characterised in that** the metal shaped parts to be cut are spun-type castings, in particular centrifugally cast pipes.

10. A process according to at least one of the preceding Claims,
**characterised in that** the metal shaped parts are made from a high-alloy chromium/nickel steel.

11. A process according to at least one of the preceding Claims,
**characterised in that** these high-alloy steels contain 0.3 to 0.5 % by weight carbon, 1.0 to 2.5 % by weight silicon, < 1.5 % by weight manganese, 20 to 50 % by weight chromium and 10 to 70 % by weight nickel.

12. A process according to at least one of the preceding Claims,
**characterised in that** the layers of coke deposited on the coked metal shaped parts have a thickness of 20 mm or above.

## Revendications

1. Procédé de séparation de pièces métalliques cokéfiées qui présentent une accrétion de couche de coke,
**caractérisé en ce qu'**
on préchauffe entre 700 et 900°C, en particulier à environ 850°C.

2. Procédé selon la revendication 1,
**caractérisé en ce qu'**
on procède au préchauffage de la pièce à séparer sur une longueur de 50 à 100 mm, en particulier d'environ 80 mm, et on procède à la séparation approximativement au milieu de cette zone.

3. Procédé selon la revendication 1 ou 2,
**caractérisé en ce que**
le préchauffage est effectué au moyen d'une flamme de gaz/oxygène, de préférence avec une pointe de 20 à 30 mm.

4. Procédé selon au moins l'une des revendications précédentes,
**caractérisé en ce qu'**
on procède au préchauffage avec deux ou plusieurs flammes.

5. Procédé selon au moins l'une des revendications précédentes,
**caractérisé en ce qu'**
on procède à la séparation au moyen d'un procédé d'électrofusion.

6. Procédé selon au moins l'une des revendications précédentes,
**caractérisé en ce qu'**
on réalise le procédé d'électrofusion au moyen d'une électrode en baguette, de préférence à environ 450 A.

7. Procédé selon au moins l'une des revendications précédentes,
**caractérisé en ce qu'**
on procède à la séparation avec des électrodes de désignation E 4343 RR (B7) ou avec des électrodes spéciales pour le rabotage des joints, le rainurage ou la coupure à l'état de fusion.

8. Procédé selon au moins l'une des revendications précédentes,
**caractérisé en ce que**
la préparation s'effectue par rabotage des joints.

9. Procédé selon au moins l'une des revendications précédentes,
**caractérisé en ce que**
les pièces métalliques à séparer sont des pièces coulées par centrifugation, en particulier des tubes coulés par centrifugation.

10. Procédé selon au moins l'une des revendications précédentes,
**caractérisé en ce que**
les pièces métalliques se composent d'un acier fortement allié au chrome/nickel.

11. Procédé selon au moins l'une des revendications précédentes,
**caractérisé en ce que**
ces aciers fortement alliés contiennent de 0,3 à 0,5 % en poids de carbone, de 1,0 à 2,5 % en poids de silicium, moins de 1,5 % en poids de manganèse, de 20 à 50 % en poids de chrome et de 10 à 70 % en poids de nickel.

12. Procédé selon au moins l'une des revendications précédentes,
**caractérisé en ce que**
les couches de coke accumulées sur les pièces métalliques cokéfiées présentent une épaisseur égale ou supérieure à 20 mm.
